# EUROPÄISCHE PATENTSCHRIFT

(11) **EP 0 890 121 B1**
(45) Veröffentlichungstag und Bekanntmachung des Hinweises auf die Patenterteilung: **14.06.2000**
(21) Anmeldenummer: 97923719.5
(22) Anmeldetag: 27.03.1997
(51) Int. Cl.: G02B 6/122, G02B 6/126

(54) **INTEGRIERT OPTISCHER FELDWEITENTRANSFORMATOR**
INTEGRATED OPTICAL BEAM SPREAD TRANSFORMER
TRANSFORMATEURS OPTIQUES INTEGRES DE L'ETALEMENT DU FAISCEAU

(30) Priorität: 29.03.1996 DE 19613701
(43) Veröffentlichungstag der Anmeldung: 13.01.1999
(73) Patentinhaber: Heinrich-Hertz-Institut für Nachrichtentechnik Berlin GmbH, 10587 Berlin (DE)
(72) Erfinder: WEINERT, Carl, Michael, D-12205 Berlin (DE); HEIDRICH, Helmut, D-12357 Berlin (DE)
(74) Vertreter: Rudolph, Margit
(86) Internationale Anmeldenummer: DE9700698
(87) Internationale Veröffentlichungsnummer: WO9737255

(56) Entgegenhaltungen:
- P.ALBRECHT ET AL: "Polarization independent integrated mode transformer for uncladded InGaAsP/InP rib waveguides without epitaxial regrowth" 22ND EUROPEAN CONFERENCE ON OPTICAL COMMUNICATION, Bd. 2, 15. - 19.September 1996, OSLO,NORWAY, Seiten 119-122, XP002039648
- L.MÖRL ET AL: "Uncladded thickness tapers integrated with InGaAsP/InP rib waveguides for efficient fibre-chip butt coupling" 21ST EUROPEAN CONFERENCE ON OPTICAL COMMUNICATION, 17. - 21.September 1995, BRUSSELS,BELGIUM, Seiten 461-464, XP002039649 in der Anmeldung erwähnt
- BOUMEDIENNE MERSALI ET AL: "THEORETICAL AND EXPERIMENTAL STUDIES OF A SPOT-SIZE TRANSFORMER WITH INTEGRATED WAVEGUIDE FOR POLARIZATION INSENSITIVE OPTICAL AMPLIFIERS" JOURNAL OF LIGHTWAVE TECHNOLOGY, Bd. 13, Nr. 9, 1.September 1995, Seiten 1865-1872, XP000541880
- DORGEUILLE F ET AL: "SPOT SIZE TRANSFORMER WITH A PERIODICALLY SEGMENTED WAVEGUIDE BASED ON INP" OPTICS LETTERS, Bd. 20, Nr. 6, 15.März 1995, Seiten 581-583, XP000493634

## Beschreibung

Die Erfindung bezieht sich auf einen integriert optischen Feldweitentransformator mit einer auf einem Substrat aufgebauten Schichtenfolge aus mehreren, durch Leitschichten voneinander getrennten Pufferschichten und einem unvergrabenen Rippenwellenleiter auf der oberen Pufferschicht, der eine wellenleitende Schicht mit einem zwischen chipseitiger und faserseitiger Schnittstelle als Dickentaper ausgebildeten Bereich und eine Rippe konstanter Dicke und Breite umfaßt.

In der integrierten Optik treten bei der Verbindung von Lichtleitern Querschnittsänderungen auf. Die sich ausbreitenden Lichtwellen müssen einer entweder aufweitenden oder konzentrierenden Feldweitenänderung unterzogen werden, um abrupte Übergänge zu vermeiden. Zusätzlich sind bei der Kopplung von photonischen Schaltkreisen mit Lichtleitfasern die Form der Ausbreitungsbilder einander anzupassen. In integrierten Lichtwellenleitem haben diese Ausbreitungsbilder die Form schmaler, liegender Ellipsen, in Fasern rotationssymmetrische Form. Für unvergrabene Rippenwellenleiter kann die Ellipsenform nicht verhindert werden, jedoch läßt sich durch Feldaufweitung das Ausbreitungsbild im Wellenleiter so vergrößern, daß die Anpassungsverluste an die Faser nur noch gering sind.

Mit Problemen optischer Wellenleiterübergänge und des Verkoppelns von Wellenleitern mit Fasern beschäftigt sich eine Reihe von Veröffentlichungen. Beispielsweise seien benannt die DE 41 03 896 C1 und die DE 41 42 850 A1, siehe dort die Figuren 3 bis 5 und zugehörige Beschreibung. Der Stand der Technik, von dem die Erfindung ausgeht, ist bekannt aus "Proceedings 21st European Conference on Optical Communication ECOC'95, Brüssel, BE, Paper Tu P22, 1995, "Uncladded thickness tapers with InGaAsP/InP rib waveguides for efficient fibre-chip butt coupling", Mörl et al.. Dieser Feldweitentransformator erfüllt bereits Anforderungen eines geringen Verlustes von 1 dB bei der Modenanpassung sowie an eine kostengünstige Herstellbarkeit. Infolge des getaperten Bereiches des Rippenwellenleiters findet eine Verlagerung des Ausbreitungsbildes in vertikaler Richtung und eine Feldweitenänderung in horizontaler und vertikaler Richtung statt. Dadurch konnte bereits eine Optimierung bezüglich der TE-Polarisation erreicht werden. Der Kopplungsverlust Chip-Faser beträgt für die TE-Komponente etwa 2 dB, ist jedoch für die TM-Komponente einige dB höher.

Das technische Problem, mit dem sich die Erfindung befaßt, besteht darin, daß zu den bereits erreichten Vorteilen eine Polarisationsunabhängigkeit des Feldweitentransformators herbeigeführt werden soll.

Erfindungsgemäß ist hierzu bei einem Feldweitentransformator der eingangs genannten Art vorgesehen, daß zwischen der faserseitigen Schnittstelle und dem Bereich des Dickentapers ein Abschnitt ausgebildet ist, über den sich die Rippe mit unveränderter Dicke und Breite erstreckt, und in dem durch Dickenreduktion der wellenleitenden Schicht auf den Wert Null beiderseits der Rippe die obere Pufferschicht freigelegt und symmetrisch zur Rippe auf eine Breite größer als die Rippenbreite reduziert ist.

Der erfindungsgemäße Feldweitentransformator arbeitet damit unabhängig von der Lichtausbreitungsrichtung, ist also eine bidirektionale optische Komponente für Chip-Faser-Kopplungen. Der gegenüber dem Stand der Technik neu geschaffene Abschnitt enthält eine zusätzliche Rippe, die im folgenden mit TM-Fokussierrippe bezeichnet wird. Sie entsteht dadurch, daß nach Abtragen der direkt unterhalb der Rippe liegenden Wellenleiterschicht die beiderseits der durchgehenden Rippe freigelegte Pufferschicht bis zur darunterliegenden Leitschicht an den Seitenbereichen symmetrisch zur Rippe abgetragen wird. Durch die TM-Fokussierrippe wird auch für die TM-Komponente eine optimale Anpassung des Ausbreitungsbildes an die rotationssymmetrische Form der Faser erreicht, das bedeutet, daß diese Anordnung polarisationsunabhängig unter Einhaltung der geringen Modenanpassungsverluste arbeitet. Es hat sich gezeigt, daß die Wellenleitung monomodisch über den gesamten Feldweitentransformator bleibt und eventuelle Strahlungsverluste ohne spürbaren Einfluß sind. Der zusätzliche Herstellungsaufwand beschränkt sich gegenüber dem Stand der Technik, von dem die Erfindung ausgeht, auf einen einzigen weiteren Strukturierungsschritt und beeinflußt die Herstellungskosten nur unwesentlich.

Es ist von eigener erfinderischer Bedeutung und auch im Hinblick auf das Zusammenwirken mit der erfindungsgemäßen Ausbildung des Abschnittes, in dem die freigelegte Pufferschicht in ihrer Breite reduziert ist, wenn der getaperte Bereich als Rampe ausgebildet ist, die eine sich in Längsrichtung kontinuierlich ändernde Neigung sowie einen stetigen Übergang zu der freigelegten Pufferschicht aufweist. Dadurch läßt sich dieser Bereich in der Länge auf das unbedingt notwendige Maß beschränken und insbesondere eine Verbesserung bei der Verlagerung des Ausbreitungsbildes in vertikaler Richtung erzielen.

Von wesentlicher Bedeutung für die Erfindung und ihre Ausführungsformen ist es, daß die Pufferschichten in Richtung zum Substrat mit zunehmender Schichthöhe ausgebildet sind. Diese Ausbildung besagt damit auch, daß die Leitschichten zwischen den Pufferschichten einen zunehmenden Abstand unterhalb der TM-Fokussierrippe besitzen und die optimale Ausbreitung sowohl für die TE- als auch für die TM-Komponente gewährleisten.

Ausbildungsformen der Erfindung werden nachfolgend anhand der schematischen Darstellungen in den Figuren näher erläutert. Dabei zeigt:
- Figur 1: eine perspektivische Darstellung des erfindungsgemäßen Feldweitentransformators,
- Figur 2: eine perspektivische Darstellung eines Feldweitentransformators gemäß dem Stand der Technik, von dem die Erfindung ausgeht,
- Figur 3: einen Längsschnitt durch den Feldweitentransformator gemäß Figur 1,
- Figur 4: drei Feldverteilungsbilder für die im Längsschnitt gemäß Figur 3 markierten Stellen,
- Figur 5: ein Schaubild für den Verlauf des Koppelverlustes und der Leuchtfleckabmessungen für die TE- und die TM-Komponente im getaperten Bereich und
- Figur 6: ein Schaubild zur Bestimmung der wesentlichen Parameter der durchgehenden Rippe.

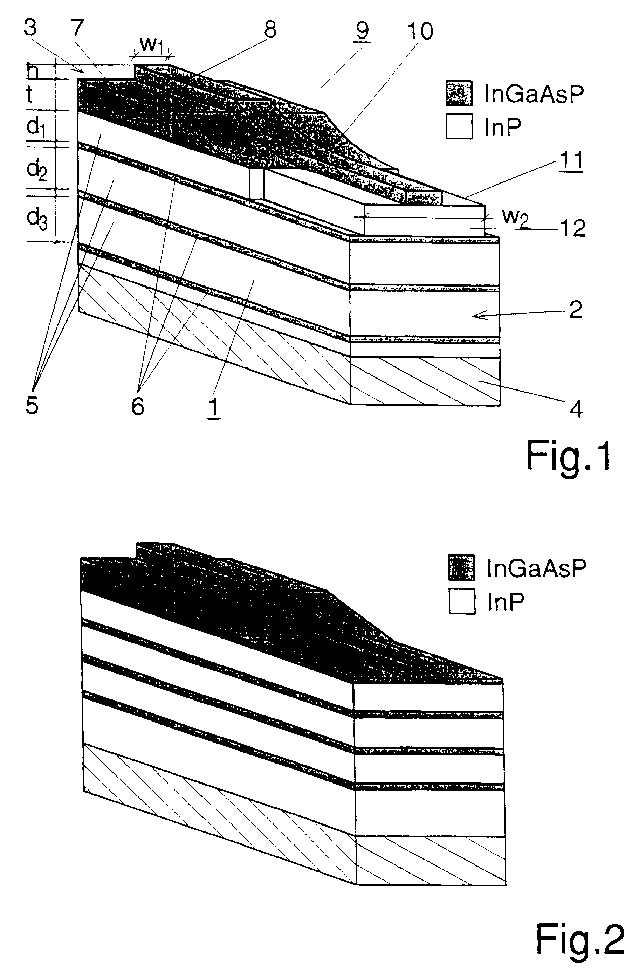

Der in Figur 1 dargestellte Feldweitentransformator 1 (im folgenden FWT) weist eine faserseitige Schnittstelle **2** und eine chipseitige Schnittstelle **3** auf. Er besteht aus einer auf einem Substrat **4** aufgebauten Folge von mehreren Pufferschichten **5**, die durch Leitschichten **6** voneinander getrennt sind. Die Schicht zwischen dem Substrat **4** und der unteren Leitschicht **6** besteht aus technologischen Gründen aus zumindest ähnlichem Material wie die Pufferschichten **5**. In Richtung zum Substrat **4** weisen die Pufferschichten **5** zunehmende Schichthöhen **d**_{**1**}**,d**_{**2**}**,d**_{**3**} auf. Damit erhöht sich der Abstand der Leitschichten **6** im selben Sinne.

Auf der oberen Pufferschicht **5** befinden sich innnerhalb des FWT eine Wellenleiterschicht **7** und eine durchgehende Rippe **8**, die mit unveränderter Breite **w1** und der Höhe **h** strukturiert ist. Die Pufferschichten **5** bestehen aus InP, alle Leitschichten **6,7** und die Rippe **8** aus InGaAsP. Die Wellenleiterschicht **7** und die durchgehende Rippe **8** sind einstückig ausgebildet.

In Längsrichtung weist der FWT **1** drei Abschnitte auf. In einem der chipseitigen Schnittstelle **3** benachbarten Abschnitt ist der Aufbau des FWT **1** identisch mit dem des anzukoppelnden oder bereits integrierten Chips. In einem mittleren Abschnitt liegt ein getaperter Bereich **9**, in dem sich die Dicke **t** der Wellenleiterschicht **7** verändert und als Rampe **10** ausgebildet ist, die eine sich in Längsrichtung koritinuierlich ändernde Neigung sowie einen stetigen Übergang zu der freigelegten Pufferschicht **5** aufweist. Die stärkste Neigung der Rampe im Bereich **9** liegt auf der zur chipseitigen Schnittstelle **3** gelegenen Seite. Im getaperten Bereich **9** fügt sich die durchgehende Rippe **8** der parabolischen Rampe **10** in ihrer Kontur an. Zwischen dem getaperten Bereich **9** und der faserseitigen Schnittstelle **2** ist in einem dritten Abschnitt die Wellenleiterschicht **7** völlig abgetragen. Hier ist die obere Pufferschicht **5** bis auf ihre von der durchgehenden Rippe **8** bedeckten Oberfläche freigelegt und symmetrisch zur durchgehenden Rippe **8** in der Breite **w**_{**2**} reduziert. Der verbleibende Rest der oberen Pufferschicht **5** bildet eine zusätzliche kurze Rippe **12** die als TM-Fokussierrippe bezeichnet wird. Die durchgehende Rippe **8** hat über alle drei Abschnitte konstante Abmessungen in der Breite **w1** und der Höhe **h**.

Die Unterschiede des erfindungsgemäßen FWT gegenüber dem nach dem Stand der Technik sind anhand der **Figur 2** veranschaulicht. Der bekannte FWT weist nur zwei Bereiche auf. Einer ist der faserseitigen Schnittstelle benachbart und als getaperter Bereich mit ebener geneigter Rampe ausgebildet, der andere ist der chipseitigen Anschlußstelle benachbart. Ein Abschnitt mit der für die Erfindung wesentlichen TM-Fokussierrippe ist beim bekannten Stand der Technik weder erwähnt noch angedeutet. Der Aufbau des bekannten FWT besteht zwar auch aus mehreren, durch Leitschichten voneinander getrennten Pufferschichten, jedoch sind diese Pufferschichten alle mit gleicher Höhe ausgebildet.

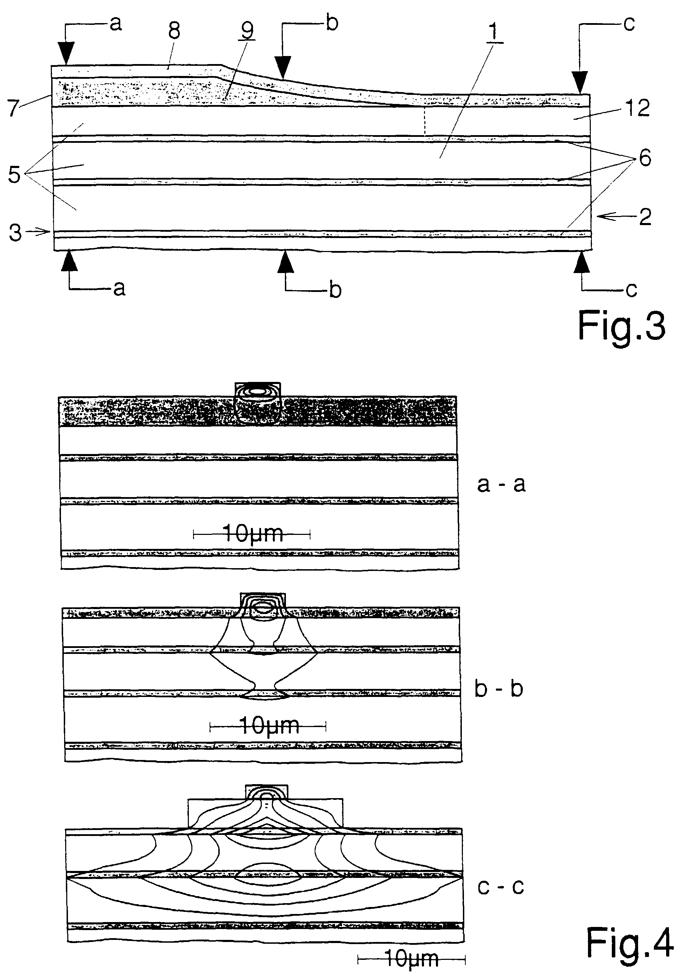

Die Figur 3 steht in engem Zusammenhang mit den Darstellungen in Figur 4. Der zentrale Längsschnitt gemäß **Figur 3** zeigt die sich über die gesamte Länge des FWT **1** zwischen der faserseitigen und der chipseitigen Schnittstelle **2** bzw **3** erstreckende durchgehende Rippe **8,** die im mittleren Bereich getaperte Wellenleiterschicht **7** sowie die sich abwechselnden Pufferschichten **5** und Leitschichten **6.** In diesem zentralen Längsschnitt ist die hintere Kante der TM-Fokussierrippe **12** gestrichelt angedeutet.

Die Darstellungen der Feldverteilungen in **Figur 4** betreffen die Ebenen der faserseitigen und der chipseitigen Schnittstellen **2** bzw. **3** sowie die Mitte des getaperten Bereichs **9**. An der chipseitigen Schnittstelle **3** wird die Lichtwelle im wesentlichen in der Wellenleiterschicht **7** unterhalb der durchgehenden Rippe **8** mit geringer Feldweite geführt. Die für den getaperten Bereich **9** dargestellte Feldverteilung zeigt eine vertikale und horizontale Aufweitung sowie eine Verlagerung des Schwerpunkts der Feldverteilung in vertikaler Richtung. An der faserseitigen Schnittstelle **2** wird die Lichtwelle mit großer Feldweite geführt. Diese Feldverteilung gewährleistet die polarisationsunabhängige Ankopplung der Lichtwelle.

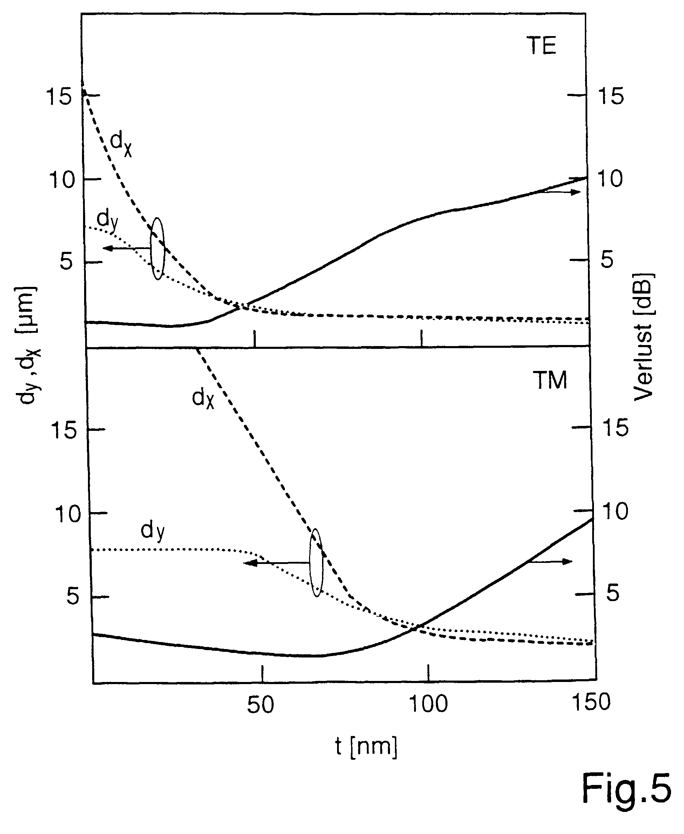

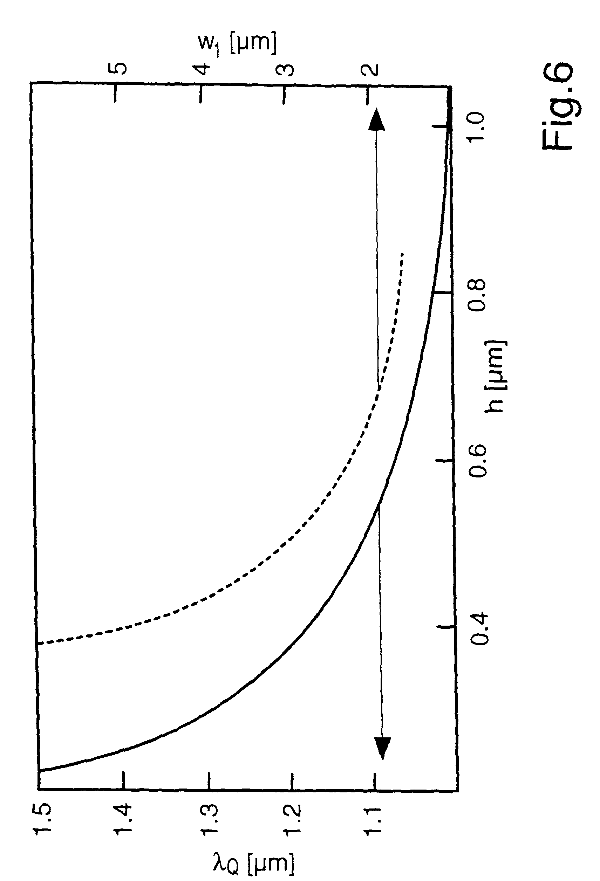

Die in den Figuren 5 und 6 dargestellten Diagramme dienen der Dimensionierung der durchgehenden Rippe **8** bei erfindungsgemäßen FWT, die also eine zusätzliche Fokussierrippe **12** aufweisen. Dabei wird im Diagramm gemäß **Figur 5** ein quaternäres Material für die Wellenlänge λ_{Q} = 1,06 µm zugrundegelegt. Der obere Bereich dieses Diagramms gilt für die TE-Komponente, der untere für die TM-Komponente. Die Pufferschichten sind mit Dicken von **d**_{**1**} = 0,7 µm, **d**_{**2**} = 1,85 µm, **d**_{**3**} = 3,15 µm (**d**_{**1**}**, d**_{**2**}**, d**_{**3**} siehe Figur 1) zugrundegelegt.

In Abhängigkeit von der Dicke t in nm der Wellenleiterschicht 7 sind jeweils die horizontalen - **dx** - und vertikalen - **dy** - Leuchtfleckdurchmesser und der Verlust aufgrund von Modenfehlanpassung angegeben. Bei kleinen Schichtdicken **t** nähert sich **d**_{**y**} konstanten Werten, die durch die Position der Leitschichten **6** vorgegeben sind. Hingegen steigt **d**_{**x**} stark an, zeigt jedoch keinen Abriß ("cut-off"), weil der Wellenleiter **7,8** lateral symmetrisch ausgebildet ist. Demgegenüber liegen die Minima der Verluste für die Modenpassung bezüglich der TE- und der TM-Komponente bei unterschiedlichen Werten der Dicke **t**. Die Verlustkurven für TE- und TM-Komponenten schneiden sich bei 35 nm und zeigen dort einen Modenanpassungsverlust von etwa 2 dB.

Anstatt den Schnittpunkt für die TE- und TM-Verlustkurven bei **t** = 35 nm zu benutzen, wird bei Ausführungsformen der Erfindung jede der beiden Polarisationen unterschiedlich und unabhängig voneinander behandelt. Die vertikale Taperung führt zunächst dazu, daß der Verlust für die TE-polarisierte Welle 1,7 dB beträgt, für die TM-polarisierte Welle jedoch 3,2 dB, da die Leuchtfleckgröße für die TM-Komponente zu groß ist. Die zusätzliche Rippe **12** verringert nun auch die Leuchtfleckgröße für die TM-Komponente und wird deshalb TM-Fokussierrippe genannt. Das Ergebnis besteht darin, daß der Modenanpassungsverlust insgesamt 1,1 dB beträgt und identisch für die TE- und TM-Polarisation ist.

Bezüglich der Herstellung erfindungsgemäßer FWT 1 ist zunächst auf den Vorteil hinzuweisen, daß das vertikale Ätzen der Taperkontur geringe Toleranzanforderungen zu erfüllen hat, um die genaue Dicke zu erreichen, bei der der Taper polariastionsunabhängig ist. Die quatemäre Schicht wird am Ende des Tapers vollständig bis zur darunter befindlichen InP-Schicht abgetragen, die als Detektionsschicht für das Abtragen dient. Die gleichen, von der Polarisation unabhängigen Verluste lassen sich bei Ausführungsformen der Erfindung für durchgehende Rippen **8** unterschiedlicher Breite **w**_{**1**} und unterschiedlicher Materialzusammensetzung erzielen, solange die Leitschichten **6** und die TM-Fokussierrippe **12** unverändert bleiben. Aus der durchgezogenen Kurve in **Figur 6** kann für eine mit 2 µm vorgegebene Breite **w1** der durchgehenden Rippe **8** der Zusammenhang zwischen der Materialzusammensetzung und der Höhe h der durchgehenden Rippe **8** für 1 dB Verlust der Modenanpassung entnommen werden. Bei der gestrichelten Kurve kann auch die Breite **w1** der durchgehenden Rippe **8** als veränderlicher Parameter angenommen werden.

Nachstehend sind Daten für ein Dimensionierungsbeispiel angegeben:

| | |
|---|---|
| Materialien | GalnAsP / InP |
| Quaternäre Schicht | λ_{Q} = 1,06 µm |
| Rippe 8 | w₁ = 2,2 µm, h = 0,6 µm |
| Rippe 12 | w₂ = 10 µm, d₁ = 0,7 µm |
| Leitschichten 6 | 0,1 µm dick |
| Pufferschichten 5 | d₁ = 0,7 µm, d₂ = 1,85 µm, d₃ = 3,15 µm |
| Taperrampe | Ausbildung mit kontinuierlicher Neigungsänderung |

## Patentansprüche

1. Integriert optischer Feldweitentransformator (FWT) mit einer auf einem Substrat (4) aufgebauten Schichtenfolge aus mehreren, durch Leitschichten (6) voneinander getrennten Pufferschichten (5) und einem unvergrabenen Rippenwellenleiter auf der oberen Pufferschicht (5), der eine wellenleitende Schicht (7) mit einem zwischen chipseitiger und faserseitiger Schnittstelle (3; 2) als Dickentaper ausgebildeten Bereich (9) und eine Rippe (8) konstanter Dicke (h) und Breite (w₁) umfaßt,
**dadurch gekennzeichnet, daß**
zwischen der faserseitigen Schnittstelle (2) und dem Bereich (9) des Dickentapers ein Abschnitt (11) ausgebildet ist, über den sich die Rippe (8) mit unveränderter Dicke (h) und Breite (w₁) erstreckt, und in dem durch Dickenreduktion der wellenleitenden Schicht (7) auf den Wert Null beiderseits der Rippe (8) die obere Pufferschicht (5) freigelegt und symmetrisch zur Rippe (8) auf eine Breite (w₂) größer als die Rippenbreite (w₁) reduziert ist.

2. Integriert optischer Feldweitentransformator nach Anspruch 1,
**dadurch gekennzeichnet, daß**
der getaperte Bereich (9) als Rampe (10) ausgebildet ist, die eine sich in Längsrichtung kontinuierlich ändernde Neigung sowie einen stetigen Übergang zu der freigelegten Pufferschicht (5) aufweist.

3. Integriert optischer Feldweitentransformator nach Anspruch 1 oder 2,
**dadurch gekennzeichnet, daß**
die Pufferschichten (5) in Richtung zum Substrat (4) mit zunehmender Schichthöhe (d₁, d₂, d₃) ausgebildet sind.

## Claims

1. Integrated optical mode field transformer (FWT) with a layered structure on a substrate (4) consisting of several buffer layers (5) which are separated from each other by guiding layers (6) and a non-baried rib waveguide arranged on the upper buffer layers (5) and provided with a waveguiding layer (7) with a section (9) formed as a thickness-taper between the chip-facing and the fiber-facing interface (3, 2) and a rib (8) of constant thickness (h) and width (w₁),
**characterized by the fact**, that
there is formed a section (11) between the fiber-facing interface (2) and the section (9) of the thickness-taper over which the rib (8) extends with constant thickness (h) and witdh (w₁) and in which the upper buffer layer (5) is exposed and is reduced symmetrically relative to the rib (8) to a width (w2) larger than the width (w₁) of the rib by reduction of the thickness of the waveguiding layer (7) to an amount zero of the rib (8).

2. Integrated mode field transformer according to claim 1,
**characterized by the fact**, that
the tapered section (9) is structured as a ramp (10) of continuously changing incline in the longitudinal direction as well as a smooth transition to the exposed buffer layer (5).

3. Integrated optical mode field transformer according to claim 1 or 2,
**characterized by the fact**, that
in the direction of the substrate (4) the buffer layers (5) are of increasing layer thickness (d₁, d₂, d₃).

## Revendications

1. Transformateur optique intégré à étalement du faisceau, comprenant une succession de couches réalisée sur un substrat (4), cette succession étant formée de couches conductrices (6) séparées par plusieurs couches-tampons (5) et d'un guide d'onde à ondulation non enfouie sur la couche tampon supérieure (5) qui comprend une couche guide d'onde (7) avec une zone (9) formée comme partie d'épaisseur croissante et une nervure (8) d'épaisseur (h) et de largeur (Wi) constante, entre l'interface (3, 2) du côté de la puce et celle du côté des fibres,
caractérisé en ce que
entre l'interface (2) du côté des fibres et la zone (9) de la partie d'épaisseur croissante, il y a un segment (11) occupé par la nervure (8) ayant une épaisseur (h) et une largeur (W₁) inchangées et, dans cette zone, par réduction d'épaisseur de la couche guide d'onde (7) à la valeur zéro de part et d'autre de la nervure (8), on dégage la couche tampon supérieure (5) et on réduit symétriquement la nervure (8) à une largeur (W₂) supérieure à la largeur de nervure (W₁).

2. Transformateur optique intégré à étalement du faisceau selon la revendication 1,
caractérisé en ce que
la zone d'épaisseur croissante (9) est en forme de rampe (10) ayant une inclinaison variant en continu dans la direction longitudinale, et une transition continue vers la couche tampon dégagée (5).

3. Transformateur optique intégré selon la revendication 1 ou 2,
caractérisé en ce que
les couches tampons (5) sont réalisées avec une hauteur de couche croissante (d₁, d₂, d₃) en direction du substrat (4).
